Europäisches Patentamt

European Patent Office

Office européen des brevets

(11) Publication number: **0 177 332**
A1

(12) **EUROPEAN PATENT APPLICATION**

(21) Application number: 85307017.5

(22) Date of filing: 01.10.85

(51) Int. Cl.⁴: **B 65 H 75/26**
**B 31 C 11/02, G 03 C 3/02**

(30) Priority: 02.10.84 AU 7453/84

(43) Date of publication of application:
09.04.86 Bulletin 86/15

(84) Designated Contracting States:
AT BE CH DE FR GB IT LI LU NL SE

(71) Applicant: ICI AUSTRALIA LIMITED
ICI House 1 Nicholson Street P.O.Box 4311
Melbourne Victoria 3001(AU)

(72) Inventor: Hunt, Hugh E.M.
Emmanual College Cambridge University
Cambridge CB2 3AP(GB)

(74) Representative: Rhind, John Lessels et al,
Imperial Chemical Industries PLC Legal Department:
Patents Po Box 6
Welwyn Garden City Herts, AL7 1HD(GB)

(54) Core for cling film rolls.

(57) The invention concerns a core which aleviates or substantially prevents rolls of film or tape from telescoping. The core of the invention comprises at least one substantially convex or barrel-shaped region. The invention also provides a process for the preparation of the cores and a method for aleviating or substantially preventing the telescoping of a roll of film or tape.

FIG. 7.

EP 0 177 332 A1

- 1 -

"CORE FOR CLING FILM ROLLS"

This invention relates to cores for rolls of film or tape and in particular to barrel-shaped or convex cores onto which film or tape is wound for storage.

In manufacture, film or tape is wound onto a core for storage and transport. It is standard practice in the industry to wind such film or tape onto a core having a symmetrical cylindrical shape. The core may be in the form of a solid or hollow cylinder and may be formed from any suitable material. However, for reasons of economy it is common to use a hollow cylinder made of cardboard.

In theory a symmetrical cylinder is the ideal shape for a core onto which film or tape is to be wound. However, in practice it is not possible to maintain perfectly symmetrical reeling tension when film or tape is wound onto a core and as a result uneven residual pressures develop in the rolled film during winding. Very high pressures are developed within a rolls of film or tape during winding and uneven residual pressures often result in layers of the film sliding over adjacent layers in a direction along the axis of the core of the roll to produce an effect called telescoping.

This effect is especially pronounced under conditions of relatively high ambient temperature, for example, in the summer months and in tropical areas, and for rolls of film or tape which have been treated with a material which can act as a lubricant, for example an adhesive composition used for adhesive tape or a chemical to increase the cling or stickiness properties of a film.

Telescoping is a common problem in the production of rolls of film or tape. The effect can be extreme in which the majority of the roll of film telescopes off the core or apparently minor in which only portion of the centre of the roll of film telescopes past the end of the core. However regardless, the end result is that the roll cannot be used in equipment designed to accept that width of core. Therefore, there is a need in the industry for an economic solution to the problem of telescoping.

A surprisingly simple and economic solution to the problem has now been found by the provision of a core which aleviates or substantially prevents rolls of film or tape from telescoping.

Accordingly the invention provides a core for a roll of film or tape said core comprising at least one substantially convex or barrel-shaped region wherein the ratio of the amount that the maximum radius is greater than the minimum radius of the convex or barrel-shaped region to the axial length of the convex or barrel-shaped region measured from the point of maximum radius to the point of minimum radius of that region is in the range of from 0.01 to 0.4.

The term "convex or barrel-shaped region" is used herein to denote a region of the core in which the core diameter increases from the standard core diameter through a maximum and decreases back to the standard core diameter to give a convex or bulbous or barrel-shaped region. The shape of the curved surface of the convex or barrel-shaped region is not narrowly critical but it is generally preferred that the core diameter increase in a relatively regular manner to give a core suface which is relatively smooth in the direction of the axis of the core as well as around the core circumference. A relatively smooth core-surface avoids distortion of the first few turns of the film or tape on the core thereby allowing all of the roll of film or tape to be utilized.

The diameter of the core of the invention is not narrowly critical and in practice it has been found convenient to use cores of the invention in which the minimum diameter of the core is the same diameter as the cylindrical core usually used for the same reeling operation. Core of the invention of diameter in the range of from 30 to 200 mm have successfully been used as cores for winding synthetic plastics material. However, cores of the invention having smaller and larger diameters may be employed and therefore this range of diameters is mentioned by way of example only and is not intended to be limiting.

The length of the core of the invention is also not narrowly critical and in practice it has been found convenient to use cores of the invention of the same length as the cylindrical cores usually used for the same reeling operation. Cores of the invention of length in the range of from 10 mm up to 1500 mm have been used successfully as cores for winding synthetic plastics material. However, cores of the invention of greater length may be utilized and therefore this range of lengths is mentioned by way of example only and is not intended to be limiting.

The preferred ratio of the difference between the maximum and minimum radius to the axial length between the maximum and minimum radius of the convex or barrel-shaped region of the core of the invention depends to a large extent on the number of convex or barrel-shaped regions in the core. For a core comprising one convex or barrel-shaped region it is in general preferred that the ratio is in the range of from 0.01 to 0.04.

Although not narrowly critical it is in general preferred that cores of the invention of length up to about 200 mm comprise one convex or barrel-shaped region, cores of length between 200 and 1000 mm comprise one or two convex or barrel-shaped regions, and cores of length over 1000 mm comprise at least two convex or barrel-shaped regions.

The core of the invention may be in the form of a solid or a hollow body and may be formed from any suitable material. Solid cores of the invention may, for example, be manufactured from metals or plastic materials by casting or machining a regular cylinder to the desired shape. Both solid an hollow cores of the invention may also be prepared from plastic materials by injection moulding techniques. Both solid and hollow cores of the invention may be made from wood by machining.

For reasons of economy, hollow cardboard cores are often preferred for use as cores in the manufacture of plastic film or tape. Hollow cardboard cores of the invention may be made in the conventional manner in which hollow cardboard cores are manufactured, that is, by building up a core from layers of paper. A very simple method of making a core of the invention is to wind onto a normal cylindrical core a sheet of film of relatively thick material (for example paper or plastic sheet of say 0.5 to 1.0 mm thickness) in the shape of an extended isosceles triangle wherein the base of the triangle has approximately the same width as the convex or barrel-shaped region of the core. The triangular shaped sheet of material may be wound onto the cylindrical core by aligning the base of the triangle parallel to the axis of the core and winding the triangular shaped sheet onto the core from the base of the triangle to its apex.

Accordingly in a further embodiment the invention provides a process for the manufacture of a core of the invention as hereinbefore defined which process comprises winding onto a cylindrical core a sheet or film in the shape of an isosceles triangle by aligning the base of the triangle parallel to the axis of the cylinder and winding the triangular shaped sheet or film onto the cylindrical core.

An alternative simple method of making a core of the invention is to slide a hollow convex or barrel-shaped sleeve onto a cylindrical core having an external diameter approximately the same or just less than the internal diameter of the sleeve. In this manner a range of different size cores of the invention can be readily prepared from standard cylindrical cores by the use of an appropriately sized sleeve.

The cores of the invention may be used as cores for a wide range of film or tape materials including synthetic plastics material, cellulose and metals. The cores of the invention are particularly useful in aleviating or substantially preventing the telescoping of rolls of film or tape.

Accordingly in yet a further embodiment the invention provides a method for aleviating or substantially preventing the telescoping of a roll of film or tape which method comprises winding said film or tape onto a core of the invention as hereinbefore defined.

The cores of the invention are especially useful as cores for the storage and transport of rolls of film or tape of synthetic plastics material such as, for example, polyethylene, polypropylene, polyester and poly(vinyl chloride). The cores of the invention are particularly useful for aleviating or substantially preventing telescoping of rolls of film or tape of
synthetic plastics material which has been treated with
a material which acts as a lubricant. In practice the
cores of the invention have been found to particularly
effective in preventing the telescoping of rolls of
polyethylene film which has been treated with a chemical
such as, for example, glycerol monooleate or poly
(isobutene) to improve the stickiness or cling properties of the film.

Particular embodiments of the invention are now
described with reference to the drawings in which:

Figure 1 is a diagrammatic plan view of a hollow core
        of the invention having a single convex or
        barrel-shaped region;

Figure 2 is a diagrammatic end elevation of the hollow
        core of Figure 1;

Figure 3 is a diagrammatic plan view of a core of the
        invention having two convex or barrel-shaped
        regions;

Figure 4 is a diagrammatic plan view of a cylindrical
        hollow core;

Figure 5 is a diagrammatic plan view of a collar which
        may be used to form a convex or barrel-shaped
        region on a cylindrical core such as that
        shown in Figure 4;

Figure 6 is a diagrammatic end elevation of the collar
        of Figure 5;

Figure 7 is a diagrammatic plan view of a core of the
        invention formed by placing the collar shown in Figure 5 on the cylindrical core shown in Figure 6; and

Figure 8 is a schematic represention of a convenient method of manufacturing a core of the invention.

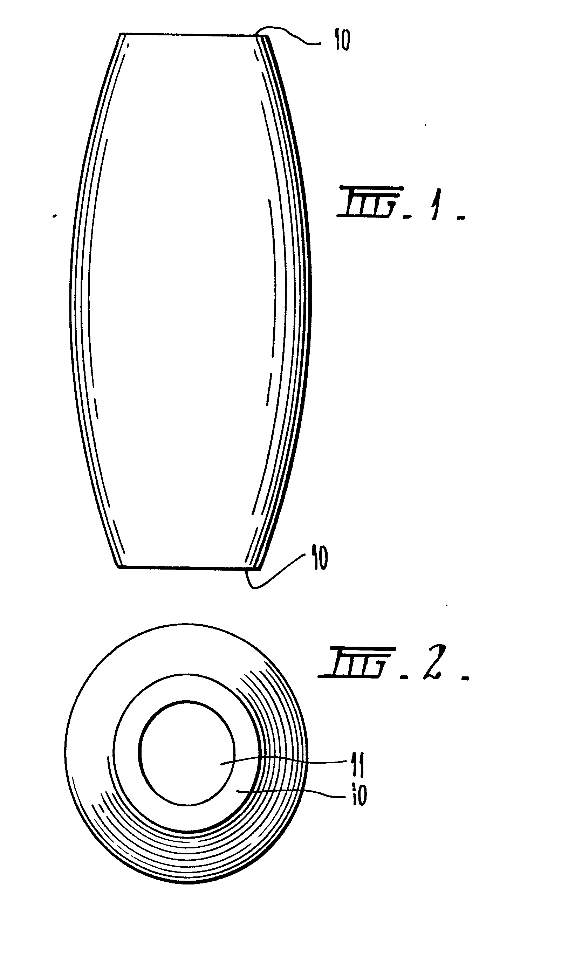

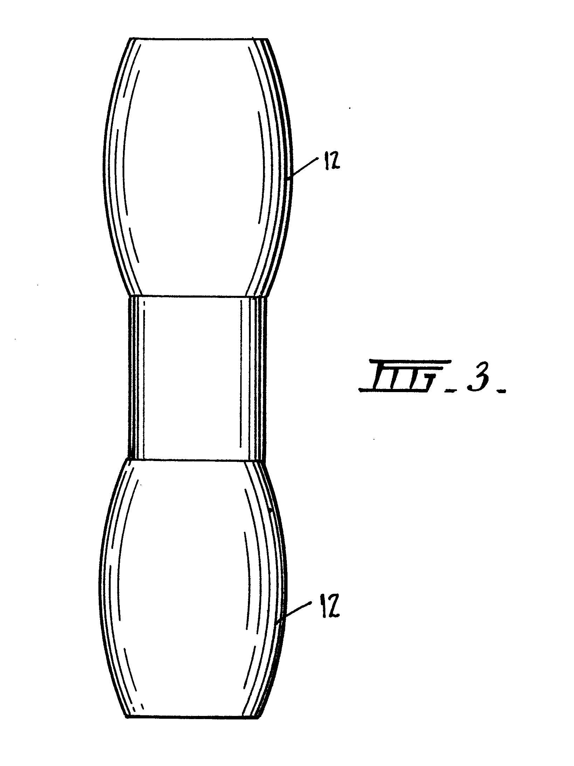

With reference to Figure 1, the ends of the core 10 are the point of minimum radius both of the core and the convex or barrel-shaped region of the core. As shown in the end elevation Figure 2 the core has a hollow centre region 11 and the ends of the core 10 are annular.

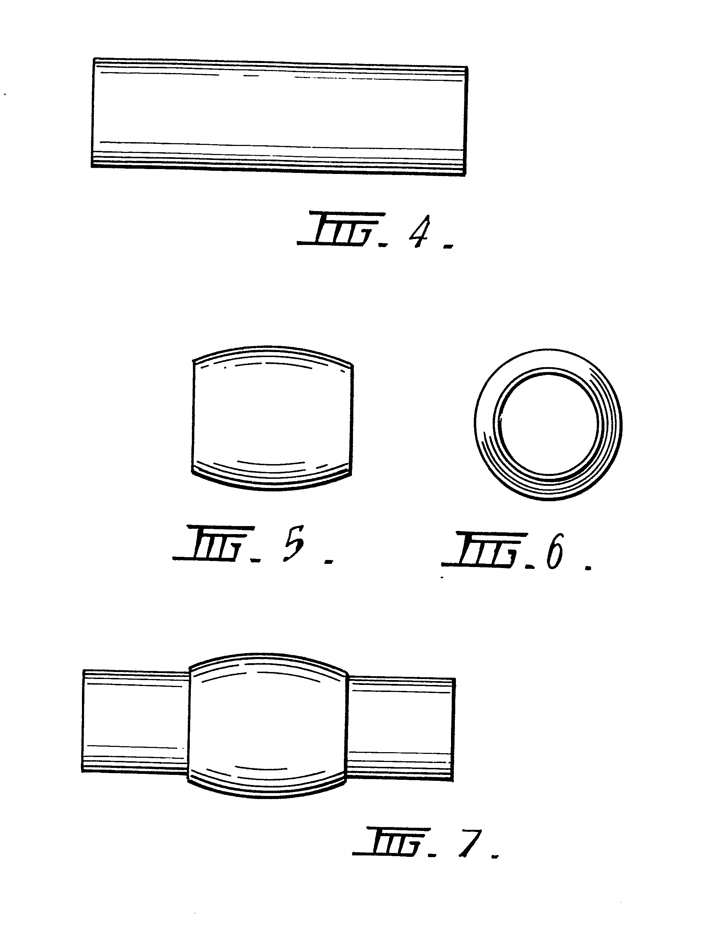

With reference to Figure 3 the core has two convex or barrel-shaped regions 12.

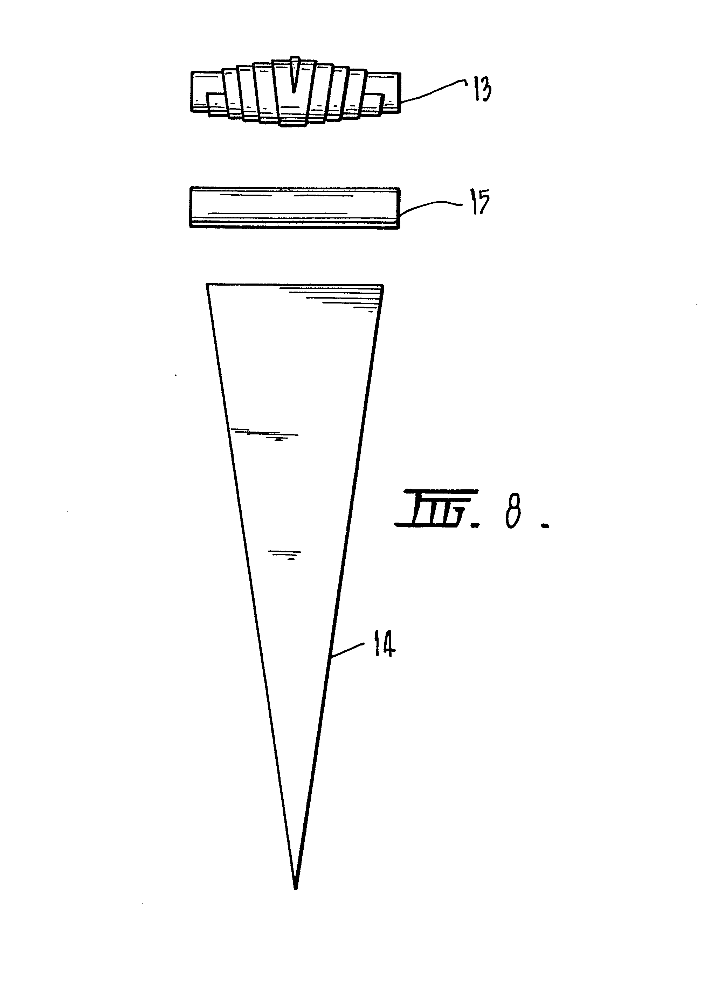

The core of the invention of Figure 7 is made by sliding the collar shown in plan in Figure 5 and in end elevation in Figure 6 onto the cylindrical core of Figure 4.

In Figure 8 the core of the invention 13 is made by winding a film or sheet 14 in the form of an extended isosceles triangle onto a hollow cylindrical core 15.

The invention is now illustrated by, but not limited
to, the following Examples.

Example 1

A core of the invention of length 510 mm, 90 mm
external diameter at each end and 98 mm external diameter
at the centre of the axis of the core was made by
winding onto a hollow cardboard cylinder 510 mm long
and 90 mm in external diameter a triangular sheet of
0.8 mm thick paper. The sheet of paper was in the form
of an isosceles triangle of base 430 mm and height 1450
mm and was wound onto the cylindrical core by aligning
the base with the axis of the cylindrical core and
winding from the base of the triangle to its apex.

A film of polyethylene of thickness 25 microns
and width 500 mm and coated with the cling property
enhancer glycerol monooleate was wound onto the core.
In storage, rolls of length 2500 metres were found to
show no telescoping. After storage for several months
the roll of film was unwound and it was found that the
layers of film first wound onto the core were substantially undamaged even after storage for that period.

Example 2

A core of the invention of length 1020 mm,
external diameter at each end 90 mm, and external
diameter at the centre of the axis of the core 98 mm
was made by winding a triangular sheet of 0.8 mm thick
paper of base 860 mm and height 1450 mm onto a hollow
cardboard cylinder of length 1020 mm and external
diameter 90 mm following the procedure described in
Example 1.

A film of polyethylene of thickness 25 microns and width 1000 mm and coated with the cling property enhancer glycerol monooleate was wound onto the core. In storage rolls of polyethylene film of length 2500 metres showed no telescoping.

Example 3

A core of the invention of length 520 mm and minimum external diameter 90 mm and comprising two convex or barrel-shaped regions of width 50 mm and maximum external diameter 90 mm centered 125 mm from each end of the core was prepared by sliding two 50 mm wide hollow convex or barrel-shaped collars, of internal diameter approximately 90 mm, minimum external diameter at each end of approximately 92 mm and maximum external diameter in the centre of 98 mm, onto a cylindrical core of length 520 mm and external diameter 90 mm. The collars were fixed in position so that the outer edge of each collar was 100 mm from an end of the core.

After storage for several months, glycerol monooleate coated polyethylene film wound onto cores prepared as described above showed no sign of telescoping and on unwinding, the layers of film first wound onto the core were found to be substantially undamaged.

Example 4

A core of the invention of length 1520 mm and minimum external diameter 90 mm and comprising three convex or barrel-shaped regions of width 50 mm and maximum external diameter 98 mm was prepared from a cylindrical core of length 1520 mm and external diameter 90 mm and three hollow convex or barrel-shaped collars of width 50 mm, internal diameter approximately 90 mm, minimum external diameter at each end of approximately 92 mm and maximum external diameter in the centre of approximately 98 mm. The hollow collars were slid onto the cylindrical core and fixed into position two at centres 125 mm from each end of the cylindrical core and the other at the centre of the cylindrical core.

Glycerol monooleate coated polyethylene film wound onto cores prepared as described above showed no signs of telescoping and, after storage for several months, the layers of film first wound onto the core were found to be substantially undamaged.

Example 5

A core of the invention of length 1020 mm, minimum external diameter of 180 mm and comprising two convex or barrel-shaped regions of width 50 mm and maximum external diameter of 188 mm was prepared from a cylindrical core of length 1020 mm and external diameter 180 mm and two hollow convex or barrel-shaped collars of width 50 mm, internal diameter approximately 180 mm, minimum external diameter at each and of approximately 182 mm and maximum external diameter in the centre of approximately 188 mm. The hollow collars were slid onto the cylindrical core and fixed into position at centres 125 mm from each end of that core.

Example 6

A core was made according to the invention from a cardboard annulus 10 mm wide and 30 mm in diameter at the ends of the annulus. A triangular strip of paper was wound onto the annulus to build up the centre of the annulus into a barrel shape of maximum diameter 30.4 mm in diameter. A roll of cellulose coated adhesive tape 10 mm wide was rewound onto the so formed core and stored for six months on a desk top near a window together with a similar roll of cellulose coated adhesive tape 10 mm wide rewound onto an unmodified cardboard annulus. After six months the roll of cellulose film on the unmodified core had telescoped whereas the roll of tape on the core of our invention had not telescoped.

- 12 -

CLAIMS

1.    A core for a roll of film or tape said core comprising at least one substantially convex or barrel-shaped region wherein the ratio of the amount that the maximum radius is greater than the minimum radius of the convex or barrel-shaped region to the axial length of the convex or barrel-shaped region measured from the point of maximum radius to the point of minimum radius of that region is in the range of from 0.01 to 0.4.

2.    A core according to claim 1 of length between 10 and 200 mm and comprising one convex or barrel-shaped region.

3.    A core according to claim 1 or claim 2 comprising one convex or barrel-shaped region and wherein the ratio of the difference between the minimum and maximum radius to the axial length between the maximum and minimum radius of said convex or barrel-shaped region is in the range of from 0.01 to 0.04.

4.    A core according to claim 1 of length between 200 and 1000 mm comprising one or two convex or barrel-shaped regions.

5.    A core according to claim 1 of length greater than 1000 mm comprising at least two convex or barrel-shaped regions.

6.    A process for making a core for a roll of film or tape comprising a substantially convex or barrel-shaped region which process comprises winding onto a cylindrical core a sheet or film in the shape of an isosceles triangle by aligning the base of the triangle parallel to the axis of the cylindrical core and winding the triangular shaped sheet or film onto the cylindrical core to give a convex or barrel-shaped region on said core wherein the ratio of the amount that the maximum radius is greater than the minimum radius of the convex or barrel-shaped region to the axial length of the convex or barrel-shaped region measured from the point of maximum radius to the point of minimum radius of that region is in the range of from 0.01 to 0.4.

7.    A process according to claim to wherein the ratio of the difference between the minimum and maximum radius to the axial length between the maximum and minimum radius of the convex or barrel-shaped region is in the range of from 0.01 to 0.04.

8.    A method for aleviating or substantially preventing the telescoping of a roll of film or tape which method comprises winding said film or tape onto a core as defined according to any one of claims 1 to 5 inclusive.

9.    A core for a roll of film or tape as defined according to any one of claims 1 to 5 inclusive substantially as herein described with reference to the drawings and any one of Examples 1 to 6 inclusive.

10. A process for the preparation of a core for a roll of film or tape as defined according to claim 6 or claim 7 substantially as herein described with reference to the drawings and any one of Examples 1, 2 and 6 inclusive.

11. A method for aleviating or substantially preventing the telescoping of a roll of film or tape as defined according to claim 8 substantially as herein described with reference to any one of Examples 1 to 4 and 6.

DATED this          day of          1985.

ICI AUSTRALIA LIMITED.

10

_FIG_ _1_ _

10

10

_FIG_ _2_ _

11
10

24

0177332

$\overline{III}$ _ 3 _

FIG. 4.

FIG. 5.

FIG. 6.

FIG. 7.

13

15

FIG. 8.

14

## European Patent Office

## EUROPEAN SEARCH REPORT

| | | | |
|---|---|---|---|
| **DOCUMENTS CONSIDERED TO BE RELEVANT** | | | EP·85307017.5 |

| Category | Citation of document with indication, where appropriate, of relevant passages | Relevant to claim | CLASSIFICATION OF THE APPLICATION (Int Cl 4) |
|---|---|---|---|
| X | <u>DE - A1 - 3 242 092</u> (WINDINGS INC.) <br> * Fig. 1; page 5, lines 1-5; page 10, line 34 - page 11, line 22 * <br><br> -- | 1-4,9 | B 65 H 75/26 <br> B 31 C 11/02 <br> G 03 C 3/02 |
| A | <u>GB - A - 1 440 515</u> (HOECHST A.G.) <br> * Claims 1-8; fig. 8; page 4, lines 52-54 * <br><br> ---- | 1 | |
| | | | **TECHNICAL FIELDS SEARCHED (Int Cl 4)** |
| | | | B 31 C <br> G 03 C <br> B 65 H |

| The present search report has been drawn up for all claims | | |
|---|---|---|
| Place of search | Date of completion of the search | Examiner |
| VIENNA | 22-11-1985 | SÜNDERMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82